# DEMANDE DE BREVET EUROPEEN

(11) **EP 2 006 575 A1**
(43) Date de publication de la demande: **24.12.2008**
(21) Numéro de dépôt: 08290575.3
(22) Date de dépôt: 18.06.2008
(51) Int. Cl.: F16H 1/20, F16H 57/12

(54) **Réducteur de précision comportant un moyen de rattrapage de jeu**

(30) Priorité: 18.06.2007 FR 0704310
(71) Demandeur: BODET AERO, société par actions simplifiée, 49120 Chemille (FR)
(72) Inventeur: Abraham, Sylvain, 49000 Angers (FR)
(74) Mandataire: Hammond, William

(57) **Abrégé**

Réducteur de précision à engrenages droits comportant un moyen de rattrapage de jeu, du genre comprenant deux colonnes (5,6) de transmission intermédiaires parallèles entre elles et reliées à un même pignon d'entrée (3) et à une même roue de sortie (4), l'une étant dite rigide (5) et l'autre dite élastique (6), cette dernière comprenant, d'une part, un arbre (7) sur lequel une roue dentée (8) est montée folle, et dont est solidaire un pignon (9), et, d'autre part, un élément élastique de torsion (10) précontraint, tel qu'un ressort hélicoïdal, dont une extrémité est solidaire dudit pignon (9) et l'autre de ladite roue dentée (8) folle. Les capacités de charge d'engrènement de ladite colonne rigide sont supérieures à celles de ladite colonne élastique.

## Description

La présente invention concerne un réducteur de précision comportant un moyen de rattrapage de jeu.

Dans le domaine de l'aviation, un réducteur peut avoir notamment pour fonction de réduire le mouvement de rotation (plusieurs tours) d'un actionneur afin de le rendre compatible avec la plage angulaire (quelques dizaines de degrés) de lecture d'un capteur de position rotatif. L'information de ce capteur est transmise à un calculateur qui permet d'assurer un asservissement en position de l'actionneur.

On connaît déjà des réducteurs de précision à engrenages droits comportant un moyen de rattrapage de jeu tel que celui décrit dans le document US-3396894-A. Ce document est relatif à un réducteur qui comprend deux colonnes de transmission intermédiaires parallèles entre elles, l'une étant dite rigide et l'autre élastique, et reliées au même pignon d'entrée et à la même roue de sortie. Cette dernière comprend un arbre sur lequel une roue dentée est montée folle, dont est solidaire un pignon, et un élément élastique de torsion, tel qu'un ressort hélicoïdal, dont une extrémité est solidaire du pignon et l'autre de la roue dentée folle. Ce ressort est précontraint de telle sorte qu'il permet de rattraper le jeu présent entre les dentures de la roue dentée et celles du pignon avec lequel elle est en prise. Par un processus de bouclage cinématique, l'ensemble des jeux d'engrènement de ce mécanisme est finalement rattrapé.

Mais, un tel réducteur ne permet un rattrapage de jeu que dans une plage donnée. Si le couple est supérieur à la précontrainte du ressort, le jeu n'est plus rattrapé et le surcouple est intégralement supporté par les engrenages de la colonne rigide. Si un dimensionnement spécifique de ces engrenages n'a pas été prévu pour absorber ce surcouple, le réducteur est mis hors service par destruction de ces derniers. Une telle mise hors service peut avoir des conséquences catastrophiques, si un tel réducteur est monté sur un avion. De plus, l'encombrement d'un tel réducteur est mal maîtrisé du fait même de la présence du ressort.

Compte-tenu des contraintes du domaine aéronautique et de la criticité d'un réducteur de précision, il y a lieu de prendre en considération les trois critères suivants:
- marge de sécurité conséquente sur le couple à transmettre.
- précision de positionnement.
- encombrement restreint.

Or, un réducteur selon le document ci-dessus ne permet pas satisfaire à ces trois critères:par exemple, l'encombrement de ce dernier est supérieur à celui d'un réducteur sans moyen de rattrapage de jeu du fait de la présence même de l'élément élastique.

Aussi un des buts de la présente invention est-il de fournir un réducteur de précision à engrenages droits comportant un moyen de rattrapage de jeu, d'un genre tel que celui décrit dans le document ci-dessus, qui permet, dans un encombrement initial donné, d'absorber un couple supérieur au couple de précontrainte de l'élément élastique.

Un autre but de l'invention est de fournir un tel réducteur de précision qui permet de satisfaire aux deux autres critères exposés ci-dessus.

Ces buts, ainsi que d'autres qui apparaîtront par la suite, sont atteints par un réducteur de précision à engrenages droits comportant un moyen de rattrapage de jeu, du genre comprenant deux colonnes de transmission intermédiaires parallèles entre elles et reliées à un même pignon d'entrée et à une même roue de sortie, l'une étant dite rigide et l'autre élastique, cette dernière comprenant, d'une part, un arbre sur lequel une roue dentée est montée folle, et dont est solidaire un pignon, et, d'autre part, un élément élastique de torsion précontraint, tel qu'un ressort hélicoïdal, dont une extrémité est solidaire du pignon et l'autre de la roue dentée folle, lequel réducteur est caractérisé, selon la présente invention, par le fait que les largeurs des dentures de la colonne rigide sont supérieures à celle de la colonne élastique, les largeurs de denture de pignon d'entrée et de la roue de sortie étant dimensionnées pour être capable de recouvrir la totalité des dentures avec lesquelles ils engrènent.

La description qui va suivre et qui ne présente aucun caractère limitatif, doit être lue en regard des figures annexées, parmi lesquelles:

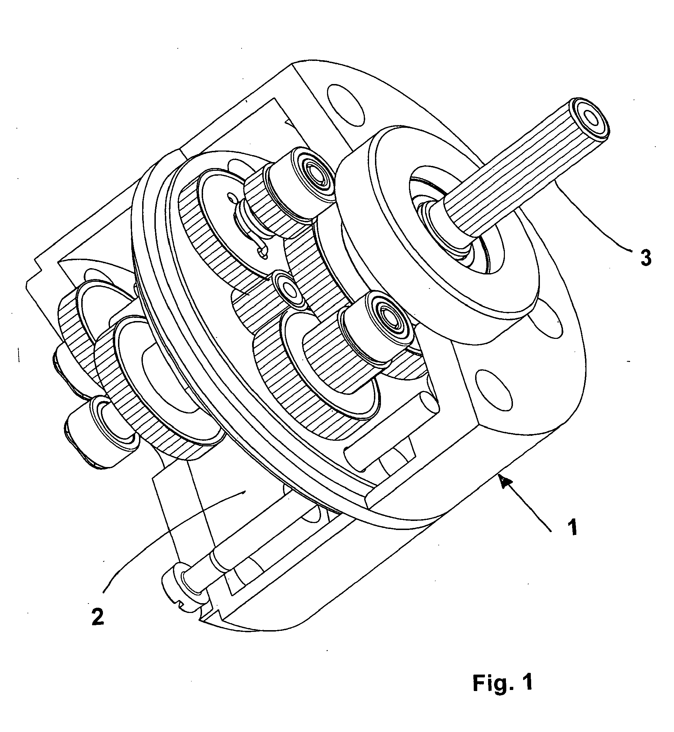

- la figure 1 est une vue en perspective d'un réducteur, avec arrachement partiel, selon la présente invention;

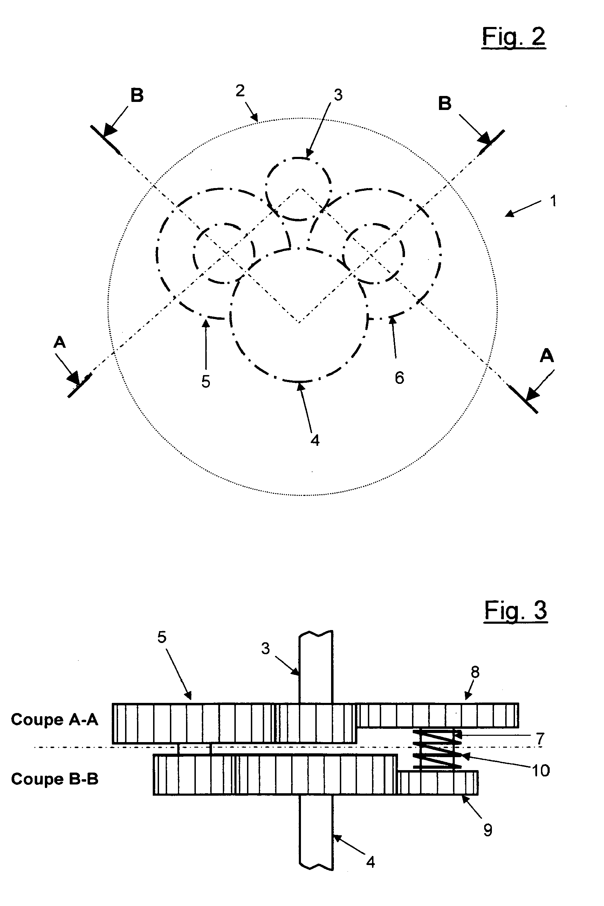

- la figure 2 est une vue schématique en coupe transversale du réducteur selon la figure 1;
- la figure 3 est une vue schématique en coupe selon les lignes A-A et B-B de la figure 2 ; et,

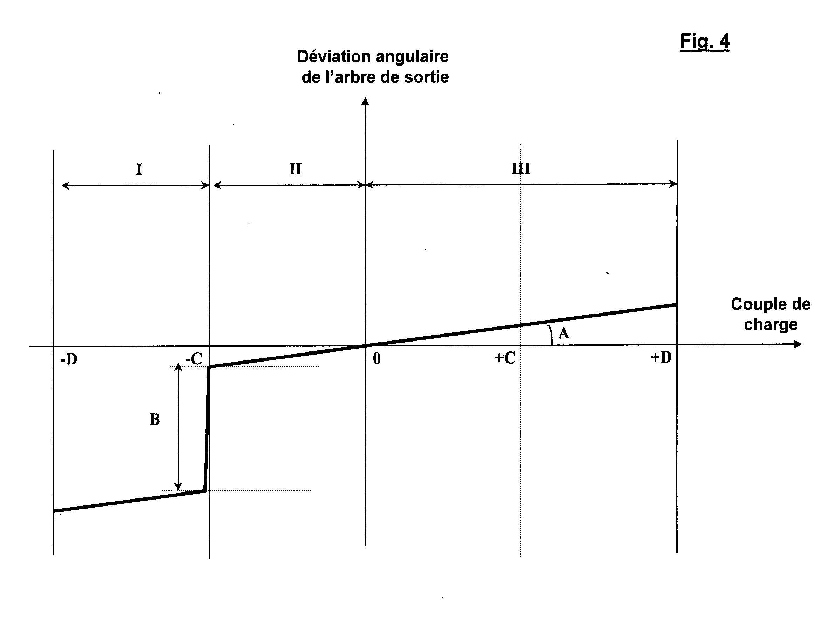

- la figure 4 est une représentation graphique des différents modes de fonctionnement d'un tel réducteur en fonction de son couple de charge.

Ainsi qu'on peut le voir sur ces figures, un réducteur de précision à engrenage droit, désigné dans son ensemble par la référence 1, comprend dans une enceinte 2, un pignon d'entrée 3 et une roue de sortie 4, deux colonnes de transmission intermédiaires, 5 et 6, l'une 5 étant dite rigide et l'autre 6 dite élastique, parallèles entre elles et reliées au pignon d'entrée 3 et à la roue de sortie 4. Cette dernière comprend, d'une part, un arbre 7 sur lequel une roue dentée 8 est montée folle, et dont est solidaire un pignon 9, et, d'autre part, un élément élastique de torsion 10 précontraint, tel qu'un ressort hélicoïdal, dont une extrémité est solidaire de ce pignon 9 et l'autre de cette roue dentée folle 8.

Les deux colonnes intermédiaires 5 et 6 sont cinématiquement équivalentes ainsi que l'aura compris l'homme du métier.

Selon la présente invention, les capacités de charge d'engrènement de la colonne rigide 5 sont supérieures à celles de la colonne élastique 6.

En effet, toute chose étant égale par ailleurs et notamment le profil des dentures, les largeurs des dentures de la colonne rigide 5 sont supérieures à celle de la colonne élastique 6, étant entendu que les largeurs de denture du pignon d'entrée 3 et de la roue de sortie 4 sont dimensionnées pour être capable de recouvrir la totalité des dentures avec lesquelles ils engrènent.

Ainsi la colonne rigide 5 pourra endurer de façon sure pour le réducteur des couples élevés, notamment ceux qui dépassent le couple de précontrainte de l'élément élastique de torsion, et la colonne élastique 6 (qui est intrinsèquement protégée contre les surcouples) peut contenir dans un même encombrement axial le dispositif de rattrapage de jeu.

La capacité de charge à la pression superficielle croit proportionnellement à la racine carrée de la largeur de denture, tandis que la capacité de charge à la flexion croit proportionnellement à la largeur de denture. Selon le mode de détérioration dimensionnant on remarquera la marge de sécurité appréciable gagnée sur la colonne rigide 5.

Tant que le couple transmis reste inférieur à la précontrainte du ressort 10 (domaine -C, +C), le dispositif de rattrapage de jeu joue son rôle : la déviation angulaire résiduelle est uniquement due à la rigidité des trains d'engrenage caractérisée par la pente A.

Au-delà de ces limites, la fonction rattrapage de jeu est temporairement annulée : la déviation angulaire croît de la valeur du jeu B, et le couple est transmis de façon sûre par la colonne rigide 5 dans les domaines I et III et par la colonne élastique 6 dans le domaine II. Ainsi, le réducteur selon la présente invention fonctionne de façon convenable hors de la seule plage de rattrapage de jeu (domaine - C, +C).

Comme aura pu le comprendre l'homme du métier, l'encombrement de la colonne élastique 6 est identique à celui de la colonne rigide 5: l'encombrement du réducteur selon la présente invention est par conséquent aussi restreint que possible.

Conformément à la présente invention, il a été réalisé un réducteur à engrenages de module de 0,2mm. Le rapport de réduction total est de 385 et celui du dernier étage est de 3. La largeur des pignon et roue de la colonne rigide 5 est de 2,2mm et celles des pignon et roue de la colonne élastique est de 1,5mm. Le couple de précharge du ressort 10 est de 5mN.m ; l'encombrement axial de ce ressort est de seulement 1,5mm. Un tel réducteur fonctionne sans jeu jusqu'à un couple de charge sur l'axe de sortie au plus égal à 15mN.m et présente une capacité de charge en endurance sur l'axe de sortie égale à 31mN.m.

Si les largeurs de denture des pignons et roues des colonnes rigide et élastique avaient été identiques (ici 1,5mm), comme c'est le cas pour les réducteurs actuels, la capacité de charge en endurance n'aurait été que de 21mN.m seulement.

## Revendications

1. Réducteur de précision à engrenages droits comportant un moyen de rattrapage de jeu, du genre comprenant deux colonnes de transmission intermédiaires parallèles entre elles et reliées à un même pignon d'entrée (3) et à une même roue de sortie (4), l'une (5) étant dite rigide et l'autre (6) dite élastique, cette dernière comprenant, d'une part, un arbre (7) sur lequel une roue dentée (8) est montée folle, et dont est solidaire un pignon (9), et, d'autre part, un élément élastique de torsion (10) précontraint, tel qu'un ressort hélicoïdal, dont une extrémité est solidaire dudit pignon (9) et l'autre de ladite roue dentée (8) folle, **caractérisé par le fait que** les largeurs des dentures de la colonne rigide (5) sont supérieures à celle de la colonne élastique (6), les largeurs de denture de pignon d'entrée (3) et de la roue de sortie (5) étant dimensionnées pour être capable de recouvrir la totalité des dentures avec lesquelles ils engrènent.
